# EUROPEAN PATENT APPLICATION

(11) **EP 4 471 925 A1**
(43) Date of publication of application: **04.12.2024**
(21) Application number: 23875280.2
(22) Date of filing: 06.10.2023
(51) Int. Cl.: H01M 10/0567, H01M 10/052, H01M 4/525, H01M 4/505, H01M 4/48, H01M 4/587, H01M 4/36

(54) **NON-AQUEOUS ELECTROLYTE AND LITHIUM SECONDARY BATTERY COMPRISING SAME**

(30) Priority: 07.10.2022 KR 20220129125
(71) Applicant: LG Energy Solution, Ltd., Seoul 07335 (KR)
(72) Inventor: LEE, Jae Won, Daejeon 34122 (KR); LEE, Jung Hoon, Daejeon 34122 (KR); LEE, Chul Haeng, Daejeon 34122 (KR); LEE, Won Tae, Daejeon 34122 (KR)
(74) Representative: Hoffmann Eitle
(86) International application number: PCT/KR2023/015463
(87) International publication number: WO 2024/076219

(57) **Abstract**

The present invention provides a non-aqueous electrolyte comprising an additive for a non-aqueous electrolyte, the additive being represented by chemical formula 1: [Chemical formula 1] wherein, in chemical formula 1, R₁ may be one selected from the group consisting of H, a C1-C10 alkyl group, a C1-C10 alkoxy group, and a C6-C8 aryl group, and R₂ may be one selected from the group consisting of a C1-C10 alkylene group and -OR₃- (wherein R₃ is a C1-C10 alkylene group).

## Description

### TECHNICAL FIELD

### [Cross-reference to Related Applications]

This application claims the benefit of Korean Patent Application No. 10-2022-0129125, filed on October 7, 2022, in the Korean Intellectual Property Office, the contents of which are incorporated herein by reference.

### [Technical Field]

The present invention relates to a non-aqueous electrolyte and a lithium secondary battery comprising same.

### BACKGROUND ART

Recently, according to the expansion of the application area of lithium secondary batteries in various application fields, requirement on secondary batteries having high capacity, high output and high stability is increasing.

Particularly, in order to achieve the high capacity of secondary batteries, if a secondary battery is operated at a high voltage, due to the deterioration of a coated film formed on the surfaces of positive/negative electrodes or the surface structure of an electrode by side reactions occurring by the deterioration of an electrolyte according to the progress of charge and discharge, transition metal ions may be eluted from the surface of the positive electrode. The eluted transition metal ions in this way may be electro-deposited on the negative electrode, and the passivation capacity of an SEI may be degraded to arise the defect of deteriorating the negative electrode.

The deterioration phenomenon of the secondary battery tends to be accelerated even further if the potential of the positive electrode increases, or batteries are exposed to a high temperature.

In addition, if a lithium secondary battery is continuously used for a long time or stood at a high temperature, a gas may be produced to increase the thickness of the battery to arise, so-called, swelling phenomenon, and the amount of the gas produced is known to be dependent on the state of the SEI.

Accordingly, in order to solve the defects, research for developing a method for reducing the swelling phenomenon of a secondary battery by suppressing the elution of metal ions at a positive electrode and forming a stable SEI film on a negative electrode and improving stability at a high temperature is being conducted.

### DISCLOSURE OF THE INVENTION

### TECHNICAL PROBLEM

According to the conduct of research from various angles to solve the tasks, the present invention provides an additive for a non-aqueous electrolyte, which may suppress the deterioration of a positive electrode, reduce the side reactions of a positive electrode and an electrolyte, and form a uniform and dense SEI film on a negative electrode.

In addition, in the present invention, there is provided a non-aqueous electrolyte having improved durability at a high temperature by including the additive for a non-aqueous electrolyte.

In addition, in the present invention, there is provided a lithium secondary battery having improved overall properties via the improvement of cycle characteristics at a high temperature and storage properties at a high temperature, by including the non-aqueous electrolyte.

### TECHNICAL SOLUTION

To accomplish the object, the present invention provides a non-aqueous electrolyte comprising an additive for a non-aqueous electrolyte, represented by Formula 1.

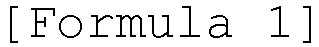

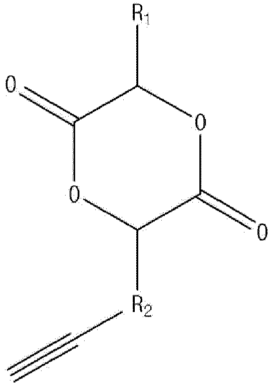

In Formula 1, R₁ is one selected from the group consisting of H, an alkyl group of 1 to 10 carbon atoms, an alkoxy group of 1 to 10 carbon atoms and an aryl group of 6 to 8 carbon atoms, and R₂ is one selected from the group consisting of an alkylene group of 1 to 10 carbon atoms and -OR₃- (R₃ is an alkylene group of 1 to 10 carbon atoms).

In addition, the present invention provides a lithium secondary battery comprising: a positive electrode; a negative electrode; and the non-aqueous electrolyte.

### ADVANTAGEOUS EFFECTS

The compound represented by Formula 1, provided as an additive for a non-aqueous electrolyte of the present invention may form a uniform and dense solid electrolyte interphase (SEI) coated film of a polymeric-type on a negative electrode. Particularly, a propargyl group is substituted at a glycolide mother body to occur the ring-opening reaction of the glycolide and the reduction decomposition of the propargyl group simultaneously, and a more firm polymeric coated film may be formed. In addition, if a positive electrode reaches a high potential,the additive of Formula 1 of the present invention may be decomposed at a positive electrode to form a positive electrode coated film.

That is, if a non-aqueous electrolyte including the compound represented by Formula 1, provided as the additive for a non-aqueous electrolyte of the present invention is included in a lithium secondary battery, the degradation of the passivation capacity of an SEI at a high temperature may be suppressed, the deterioration of a negative electrode may be prevented, and the lifetime characteristics of a battery may be improved.

In addition, the compound represented by Formula 1, provided as the additive for a non-aqueous electrolyte of the present invention may form a coated film on a positive electrode, if exposed to a high potential, and the deterioration of the positive electrode may be prevented.

Accordingly, if the non-aqueous electrolyte of the present invention, including the compound of Formula 1 is used, a stable electrode-electrolyte interface may be formed at a high temperature, cycle characteristics at a high temperature and storage properties at a high temperature may be improved, and a lithium secondary battery having improved overall performance may be accomplished.

### BEST MODE FOR CARRYING OUT THE INVENTION

It will be understood that words or terms used in the present disclosure and claims shall not be interpreted as the meaning defined in commonly used dictionaries. It will be further understood that the words or terms should be interpreted as having a meaning that is consistent with the technical idea of the invention, based on the principle that an inventor may properly define the meaning of the words or terms to best explain the invention.

It will be further understood that the terms "comprises", "provided" or "having," when used in this specification, specify the presence of stated features, numerals, steps, elements, or combinations thereof, but do not preclude the presence or addition of one or more other features, numerals, steps, elements or combinations thereof.

In addition, in the term "a to b carbon atoms" in the description, "a" and "b" mean the numbers of carbon atoms included in a particular functional group. That is, the functional group may include "a" to "b" carbon atoms. For example, "alkylene group of 1 to 5 carbon atoms" means an alkylene group including 1 to 5 carbon atoms, i.e., -CH₂-, - CH₂CH₂-, -CH₂CH₂CH₂-, -CH₂(CH₃)CH-, -CH(CH₃)CH₂-, -CH(CH₃)CH₂CH₂-, or the like.

In addition, in the description, an alkyl group may be substituted or unsubstituted. The "substituted" means that at least one or more hydrogen bonded to carbon are substituted with elements other than hydrogen, unless otherwise separately defined, for example, substituted with an alkyl group of 1 to 20 carbon atoms, an alkenyl group of 2 to 20 carbon atoms, an alkynyl group of 2 to 20 carbon atoms, an alkoxy group of 1 to 20 carbon atoms, a cycloalkyl group of 3 to 12 carbon atoms, a cycloalkenyl group of 3 to 12 carbon atoms, a heterocycloalkyl group of 3 to 12 carbon atoms, a heterocycloalkenyl group of 3 to 12 carbon atoms, an aryloxy group of 6 to 12 carbon atoms, a halogen atom, a fluoroalkyl group of 1 to 20 carbon atoms, a nitro group, an aryl group of 6 to 20 carbon atoms, a heteroaryl group of 2 to 20 carbon atoms, a haloaryl group of 6 to 20 carbon atoms or the like.

Hereinafter, the present invention will be explained in more detail.

### Non-aqueous Electrolyte

The non-aqueous electrolyte according to the present invention includes a compound represented by Formula 1 as an additive. A lithium secondary battery using the non-aqueous electrolyte including the additive of the present invention may suppress deterioration by an interface reaction at a high temperature and show excellent cycle characteristics at a high temperature and storage properties at a high temperature.

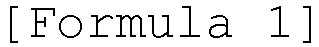

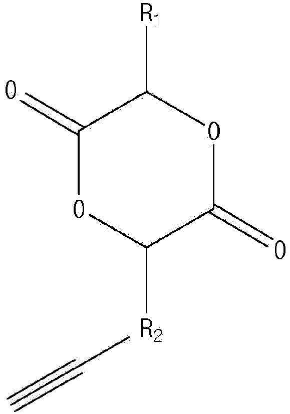

The compound of Formula 1 may be decomposed and polymerized into a polymer type, and a uniform and dense polymeric-type coated film may be formed on the surface of a negative electrode. The coated film thus formed may prevent the precipitation and plating due to the elution of a transition metal at a positive electrode and may improve durability and lifetime characteristics at a high temperature. In addition, if the lithium secondary battery is exposed to a high potential, the residue of the compound of Formula 1 remaining after forming the coated film on the negative electrode may also form a coated film on a positive electrode, and the deterioration due to the oxidation decomposition of an electrolyte at the surface of the positive electrode may be prevented.

In Formula 1, R₁ may be one selected from the group consisting of H, an alkyl group of 1 to 10 carbon atoms, an alkoxy group of 1 to 10 carbon atoms and an aryl group of 6 to 8 carbon atoms. Preferably, in Formula 1, R₁ may be H or an alkyl group of 1 to 10 carbon atoms, and in this case, the volume of a substituent is small, and a denser coated film may be formed.

In Formula 2, R₂ may be one selected from the group consisting of an alkylene group of 1 to 10 carbon atoms and - OR₃- (R₃ is an alkylene group of 1 to 10 carbon atoms), and preferably, R₂ may be one selected from the group consisting of an alkylene group of 1 to 5 carbon atoms and -OR₃- (R₃ is an alkylene group of 1 to 5 carbon atoms).

Particularly, the compound of Formula 1 of the present invention may be one selected from the group consisting of Formulas 1a to 1d.

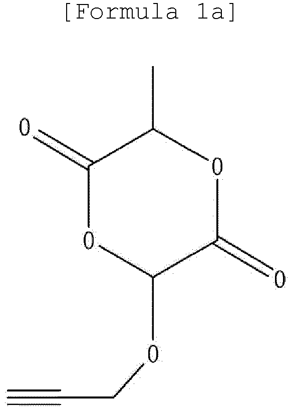

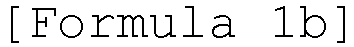

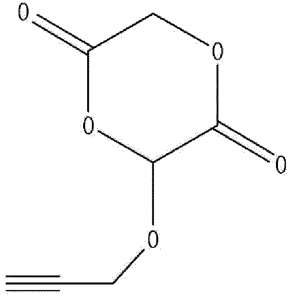

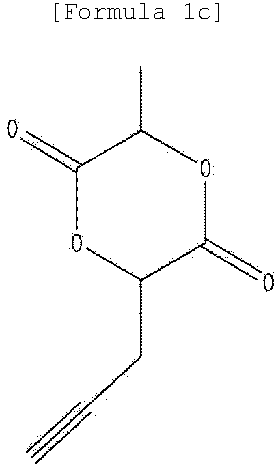

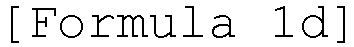

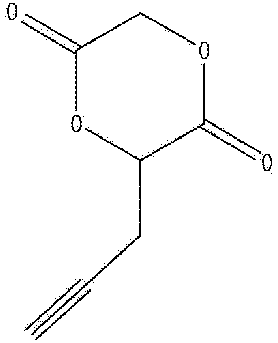

The additive for a non-aqueous electrolyte according to the present invention may be included in 0.01 parts by weight to 5.0 parts by weight, preferably, 0.1 parts by weight to 3.0 parts by weight, more preferably, 0.5 parts by weight to 1.0 part by weight on the basis of 100 parts by weight of the non-aqueous electrolyte. If the above-described range is satisfied, a sufficient amount of an SEI may be formed, the viscosity of an electrolyte may be kept to a suitable level, and effects of excellent rate properties and capacity properties may be achieved during the storage thereof at a high temperature.

The lithium salt included in the non-aqueous electrolyte of the present invention is used as an electrolyte salt in a lithium secondary battery and is used as a medium for transferring ions. Generally, the lithium salt includes, for example, Li⁺ as a cation and as an anion, at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Particularly, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, lithium bis(fluorosulfonyl) imide (LiFSI;LiN(SO₂F)₂), lithium bis(perfluoroethanesulfonyl) imide (LiBETI; LiN(SO₂CF₂CF₃)₂), and lithium bis(trifluoromethanesulfonyl) imide (LiTFSI; LiN(SO₂CF₃)₂), or a mixture of two or more thereof. Besides, lithium salts commonly used in the electrolyte of a lithium secondary battery may be used, without limitation.

The concentration of the lithium salt may be suitably changed within a range commonly used, but may be included in a concentration of 0.5 M to 3 M, preferably, a concentration of 0.5 M to 2.5 M, more preferably, a concentration of 0.8 M to 2 M in an electrolyte to obtain the optimum forming effects of a coated film for preventing the corrosion of the surface of an electrode. If the concentration of the lithium salt satisfies the above-described range, the improving effects of the cycle characteristics when storing a lithium secondary battery at a high temperature may be sufficient, and the viscosity of the non-aqueous electrolyte may be appropriate, and thus, the immersion properties of the electrolyte may be improved.

The organic solvent included in the non-aqueous electrolyte of the present invention may include at least one or more organic solvents selected from the group consisting of a cyclic carbonate-based organic solvent, a linear carbonate-based organic solvent, a linear ester-based organic solvent and a cyclic ester-based organic solvent.

Particularly, the organic solvent may include a cyclic carbonate-based organic solvent, a linear carbonate-based organic solvent, or a mixed organic solvent thereof.

The cyclic carbonate-based organic solvent is an organic solvent having a high viscosity and is an organic solvent having high permittivity and dissociating a lithium salt in an electrolyte well, and may particularly include at least one or more organic solvents selected from the group consisting of ethylene carbonate (EC), propylene carbonate (PC), 1,2-butylene carbonate, 2,3-butylene carbonate, 1,2-pentylene carbonate, 2,3-pentylene carbonate and vinylene carbonate, and may include ethylene carbonate among them.

In addition, the linear carbonate-based organic solvent is an organic solvent having a low viscosity and a low permittivity, and may typically use at least one or more organic solvents selected from the group consisting of dimethyl carbonate (DMC), diethyl carbonate (DEC), dipropyl carbonate, ethyl methyl carbonate (EMC), methyl propyl carbonate and ethyl propyl carbonate, particularly, ethyl methyl carbonate (EMC).

In addition, in order to prepare an electrolyte having high ionic conductivity, the organic solvent may additionally include one or more ester-based organic solvents selected from the group consisting of a linear ester-based organic solvent and a cyclic ester-based organic solvent in addition to the at least one or more carbonate-based organic solvents selected from the group consisting of the cyclic carbonate-based organic solvent and the linear carbonate-based organic solvent.

The linear ester-based organic solvent may particularly include at least one or more organic solvents selected from the group consisting of methyl acetate, ethyl acetate, propyl acetate, methyl propionate, ethyl propionate, propyl propionate and butyl propionate.

In addition, the cyclic ester-based organic solvent may include at least one or more organic solvents selected from the group consisting of γ-butyrolactone, γ-valerolactone, γ-caprolactone, σ-valerolactone and ε-caprolactone.

Meanwhile, the organic solvent may additionally use organic solvents commonly used in a non-aqueous electrolyte as necessary, without limitation. For example, at least one or more organic solvents among an ether-based organic solvent, a glyme-based solvent and a nitrile-based organic solvent may be additionally included.

The ether-based solvent may use one selected from the group consisting of dimethyl ether, diethyl ether, dipropyl ether, methyl ethyl ether, methyl propyl ether, ethyl propyl ether, 1,3-dioxolane (DOL) and 2,2-bis(trifluoromethyl)-1,3-dioxolane (TFDOL), or a mixture of two or more thereof, without limitation.

The glyme-based solvent has higher permittivity and lower surface tension in contrast to the linear carbonate-based organic solvent, and little reactivity with a metal, and may include at least one or more selected from the group consisting of dimetoxyethane (glyme, DME), diethoxyethane, diglyme, triglyme and tetraglyme (TEGDME), without limitation.

The nitrile-based solvent may be one or more selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, without limitation.

The non-aqueous electrolyte of the present invention may additionally include a known electrolyte additive in the non-aqueous electrolyte as necessary, in order to prevent the induction of the collapse of the negative electrode through the decomposition of the non-aqueous electrolyte in high-output environment, or to further improve high-rate discharge properties at a low temperature, stability at a high temperature, the prevention of overcharge, the suppressing effects of battery expansion at a high temperature or the like.

The other electrolyte additive may include at least one or more additives for forming an SEI layer, selected from the group consisting of a cyclic carbonate-based compound, a sultone-based compound, a sulfate-based compound, a phosphate-based compound, a borate-based compound, a nitrile-based compound, a benzene-based compound, an amine-based compound, a silane-based compound and a lithium salt-based compound.

The cyclic carbonate-based compound may include vinylene carbonate (VC), vinylethylene carbonate, or fluoroethylene carbonate.

The sultone-based compound may be at least one or more compounds selected from the group consisting of 1,3-propane sultone (PS), 1,4-butane sultone, ethene sultone, 1,3-propene sultone (PRS), 1,4-butene sultone and 1-methyl-1,3-propene sultone.

The sulfate-based compound may include ethylene sulfate (Esa), trimethylene sulfate (TMS), or methyl trimethylene sulfate (MTMS).

The phosphate-based compound may include one or more compounds selected from the group consisting of lithium difluoro(bisoxalato)phosphate, lithium difluorophosphate, tris(trimethyl silyl)phosphate, tris(trimethyl silyl)phospite, tris(2,2,2-trifluoroethyl)phosphate and tris(2,2,2-trifluoroethyl)phosphite.

The borate-based compound may include tetraphenylborate, lithium oxalyldifluoroborate (LiODFB), and lithium bisoxalatoborate (LiB(C₂O₄)₂, LiBOB).

The nitrile-based compound may include at least one or more compounds selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte, and may include lithium difluorophosphate (LiDFP), LiPO₂F₂ or LiBF₄.

Among the additional electrolyte additives, if the combination of vinylene carbonate (VC), 1,3-propane sultone and ethylene sulfate is additionally included, a sturdier SEI coated film may be formed on the surface of the negative electrode at the initial activation process of a secondary battery, the production of a gas due to the decomposition of an electrolyte at a high temperature may be suppressed, and the stability of the secondary battery at a high temperature may be improved.

Meanwhile, the additional electrolyte additives may be used by mixing two or more types in 0.1 to 10 wt%, particularly, 0.2 to 8 wt%, preferably, 0.5 to 8 wt% on the basis of the total weight of the non-aqueous electrolyte. If the content of the additional electrolyte additives satisfies the above-described range, the improving effects of ion conductivity and cycle characteristics may be even better.

### Lithium Secondary Battery

The present invention provides a lithium secondary battery including the non-aqueous electrolyte.

Particularly, the lithium secondary battery includes a positive electrode including a positive electrode active material, a negative electrode including a negative electrode active material, a separator disposed between the positive electrode and the negative electrode and the above-described non-aqueous electrolyte.

In this case, the lithium secondary battery of the present invention may be manufactured by a common method known in this technical field. For example, a positive electrode, a negative electrode and a separator between the positive electrode and the negative electrode may be stacked in order to manufacture an electrode assembly, the electrode assembly may be inserted into a battery case, and the non-aqueous electrolyte according to the present invention may be injected, to manufacture the lithium secondary battery.

The lithium secondary battery of the present may have a driving voltage of 4.47 V or more and may be operated at a high voltage.

### (1) Positive Electrode

The positive electrode may be manufactured by applying a positive electrode mixture slurry including a positive electrode active material, a binder, a conductive agent and a solvent on a positive electrode current collector.

The positive electrode current collector is not specifically limited as long as it does not induce the chemical change of the battery and has conductivity, for example, stainless steel, aluminum, nickel, titanium, baked carbon, or aluminum or stainless steel, surface treated with carbon, nickel, titanium, silver or the like, may be used.

The positive electrode active material may be a compound capable of conducting reversible intercalation and deintercalation of lithium, particularly, a lithium metal oxide including one or more metals such as cobalt, manganese, nickel and aluminum, and lithium. More particularly, the lithium metal oxide may be a lithium-manganese-based oxide (for example, LiMnO₂, LiMn₂O₄ or the like), a lithium-cobalt-based oxide (for example, LiCoO₂ or the like), a lithium-nickel-based oxide (for example, LiNiO₂ or the like), a lithium-nickel-manganese-based oxide (for example, LiNi_{1-Y}Mn_{Y}O₂ (where 0<Y<1)), LiMn_{2-Z}Ni_{Z}O₄ (where 0 < Z < 2) or the like), a lithium-nickel-cobalt-based oxide (for example, LiNi_{1-Y1}Co_{Y1}O₂ (where 0<Y1<1) or the like), a lithium-manganese-cobalt-based oxide (for example, LiCo_{1-Y2}Mn_{Y2}O₂ (where 0<Y2<1)), LiMn_{2-Z1}Co_{Z1}O₄ (where 0<Z1<2) or the like), a lithium-nickel-manganese-cobalt-based oxide (for example, Li(NiₚCo_{q}Mnᵣ)O₂ (where 0<p<1, 0<q<1, 0<r<1, and p+q+r=1)), Li(Niₚ₁Co_{q1}Mnᵣ₁)O₄ (where 0<p1< 2, 0<q1<2, 0<r1<2 and p1+q1+r1=2) or the like), a lithium-nickel-cobalt-transition metal(M) oxide (for example, Li (Niₚ₂Co_{q2}Mnᵣ₂Mₛ₂)O₂(where M is selected from the group consisting of Al, Fe, V, Cr, Ti, Ta, Mg and Mo, and p2, q2, r2 and s2 are atomic fractions of independent elements, where 0 <p2<1, 0<q2<1, 0<r2<1, 0<s2<1, and p2+q2+r2+s2=1) or the like) or the like, and one or a compound of two or more thereof may be included.

Among them, in view of improving the capacity properties and the stability of a battery, the lithium metal oxide may be LiCoO₂, LiMnO₂, LiNiO₂, a lithium nickel manganese cobalt oxide (for example, Li(Ni_{1/3}Mn_{1/3}Co_{1/3})O₂, Li (Ni_{0.6}Mn_{0.2}Co_{0.2})O₂, Li (Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂ or the like), a lithium nickel cobalt aluminum oxide (for example, Li(Ni_{0.8}Co_{0.15}Al_{0.05})O₂ or the like), or a lithium nickel manganese aluminum oxide (for example, Li(Ni_{0.86}Co_{0.05}Mn_{0.07}Al_{0.02})O₂) or the like, and one or a compound of two or more thereof may be included.

Among them, in view of improving the capacity properties of a battery to the highest, a positive electrode active material having the nickel content of 80 atom% or more may be used. For example, the lithium transition metal oxide may include [Formula 2]below.

[Formula 2] LiₓNiₐCo_{b}M¹_{c}M²_{d}O₂

In Formula 2, M¹ may be one or more selected from Mn and Al, preferably, Mn or the combination of Mn and Al in view of durability.

M² may be one or more selected from the group consisting of Zr, B, W, Mg, Ce, Hf, Ta, La, Ti, Sr, Ba, F, P and S.

The x represents the atomic fraction of lithium in the lithium transition metal oxide, and may satisfy 0.90≤x≤1.1, preferably, 0.95≤x≤1.08, more preferably, 1.0≤x≤1.08.

The a represents the atomic fraction of nickel among the metal elements excluding lithium in the lithium transition metal oxide, and may satisfy 0.80≤a<1.0, preferably, 0.80≤a≤0.95, more preferably, 0.80≤a≤0.90. If the nickel content satisfies the above range, high capacity properties may be accomplished.

The b represents the atomic fraction of cobalt among the metal elements excluding lithium in the lithium transition metal oxide, and may satisfy 0<b<0.2, 0<b≤0.15, or 0.01≤b≤0.10.

The c represents the atomic fraction of M¹ among the metal elements excluding lithium in the lithium transition metal oxide, and may satisfy 0<c<0.2, 0<c≤0.15, or 0.01≤c≤0.10.

The d represents the atomic fraction of M² among the metal elements excluding lithium in the lithium transition metal oxide, and may satisfy 0≤d≤0.1, or 0≤d≤0.05.

The positive electrode active material may be included in 60 to 99 wt%, preferably, 70 to 99 wt%, more preferably, 80 to 98 wt% on the basis of the total weight of the solid content excluding the solvent in the positive electrode mixture slurry.

The binder is a component assisting the bonding of the active material, the conductive agent or the like, and the bonding to the current collector.

The binder may include, for example, polyfluorovinylidene, polyvinyl alcohol, carboxymethyl cellulose (CMC), starch, hydroxypropyl cellulose, regenerated cellulose, polyvinyl pyrrolidone, polytetrafluoroethylene, polyethylene (PE), polypropylene, an ethylene-propylene-diene monomer, a sulfonated ethylene-propylene-diene monomer, a styrene-butadiene rubber, a fluorine rubber, various copolymers or the like.

Generally, the binder may be included in 1 to 20 wt%, preferably, 1 to 15 wt%, more preferably, 1 to 10 wt% on the basis of the total weight of the solid content excluding the solvent of the positive electrode mixture slurry.

The conductive agent is a component for further improving the conductivity of the positive electrode active material, and may be added in 1 to 20 wt% on the basis of the total weight of the solid content in the positive electrode mixture slurry. The conductive agent is not specifically limited as long as it does not induce the chemical change of a battery and has conductivity, and may include: for example, carbon powder such as carbon black, acetylene black, Ketjen black, channel black, furnace black, lamp black and thermal black; graphite powder such as natural graphite, artificial graphite and graphite, having a very developed crystal structure; conductive fibers such as carbon fibers and metal fibers; fluorocarbon powder; conductive powder such as aluminum powder and nickel powder; conductive whiskers such as zinc oxide whiskers and potassium titanate whiskers; conductive metal oxides such as titanium oxide; and conductive materials such as polyphenylene derivatives.

Generally, the conductive agent may be included in 1 to 20 wt%, preferably, 1 to 15 wt%, more preferably, 1 to 10 wt% on the basis of the total weight of the solid content excluding the solvent in the positive electrode mixture slurry.

The solvent may include an organic solvent such as N-methyl-2-pyrrolidone (NMP) or the like, and may be used in an amount to provide a preferably viscosity together with the positive electrode active material, and selectively a binder and a conductive agent. For example, the solvent may be included so that the concentration of the solid content including the positive electrode active material, and selectively a binder and a conductive agent may be 50 to 95 wt%, preferably, 70 to 95 wt%, more preferably, 70 to 90 wt%.

### (2) Negative Electrode

The negative electrode may be manufactured by applying a negative electrode mixture slurry including, for example, a negative electrode active material, a binder and a solvent on the negative electrode current collector, or a graphite electrode composed of carbon (C) or a metal itself may be used as the negative electrode.

For example, if a negative electrode is manufactured by applying a negative electrode mixture slurry on a negative electrode current collector, the negative electrode current collector generally has a thickness of 3 to 500 um. The negative electrode current collector is not specifically limited as long as it does not induce the chemical change of the battery and has conductivity, for example, copper, stainless steel, aluminum, nickel, titanium, baked carbon, copper or stainless steel, surface treated with carbon, nickel, titanium, silver or the like, an aluminum-cadmium alloy or the like, may be used. In addition, like the positive electrode current collector, minute embossing may be formed on the surface thereof to reinforce the bonding force of the negative electrode active material, and various types such as a film, a sheet, a foil, a net, a porous body, a foamed body, and a non-woven fabric may be used.

In addition, the negative electrode active material may include at least one or more selected from the group consisting of a lithium metal, a carbon material which may reversibly intercalate/deintercalate lithium ions, a metal or an alloy of the metal and lithium, a metal composite oxide, a material capable of doping or de-doping lithium and a transition metal oxide.

As the carbon material which may reversibly intercalate/deintercalate lithium ions, a carbon-based negative electrode active material generally used in a lithium ion secondary battery may be used without specific limitation, typically, crystalline carbon, amorphous carbon or both of them. Examples of the crystalline carbon may include graphite such as natural graphite and synthetic graphite of an amorphous-type, a plate-type, a flake-type, a spherical-type or a fibrous-type, and examples of the amorphous carbon may include soft carbon (baked carbon at a low temperature), hard carbon, mesophase pitch carbide, baked cokes or the like.

As the metal or the alloy of the metal and lithium, a metal selected from the group consisting of Cu, Ni, Na, K, Rb, Cs, Fr, Be, Mg, Ca, Sr, Si, Sb, Pb, In, Zn, Ba, Ra, Ge, Al and Sn, or alloys of the metals with lithium may be used.

The metal composite oxide may use one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1) and SnₓMe₁₋ₓMe'_{y}O_{z} (Me: Mn, Fe, Pb or Ge; Me': Al, B, P, Si, elements in group 1, group 2 and group 3 in a periodic table or halogen; 0<x≤1; 1≤y≤3; and 1≤z≤8).

As the material capable of doping or de-doping lithium, Si, SiOₓ(0<x≤2), a Si-Y alloy (Y is an element selected from the group consisting of an alkali metal, an alkaline earth metal, elements in group 13, elements in group 14, a transition metal, a rare earth element and combinations thereof, where Si is excluded), Sn, SnO₂, Sn-Y (Y is an element selected from the group consisting of an alkali metal, an alkaline earth metal, elements in group 13, elements in group 14, a transition metal, a rare earth element and combinations thereof, where Sn is excluded) or the like, and at least one thereof and SiO₂ may be mixed and used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po and combinations thereof.

As the transition metal oxide, a lithium-containing titanium composite oxide (LTO), vanadium oxide, lithium vanadium oxide or the like may be used.

Among them, the negative electrode active material may be composed of SiOₓ(0≤x<2) or a mixture of graphite and SiOₓ(0≤x<2). In view of increasing the capacity of a lithium secondary battery, the graphite and SiOₓ(0≤x<2) may be included in a weight ratio of 100:0 to 70:30.

The negative electrode active material may be included in 60 to 99 wt%, preferably, 70 to 99 wt%, more preferably, 80 to 98 wt% on the basis of the total weight of the solid content in the negative electrode mixture slurry.

The binder is a component assisting the bonding among the conductive agent, the active material and the current collector. The binder may include, for example, polyvinylidene fluoride (PVDF), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, an ethylene-propylene-diene monomer, a sulfonated ethylene-propylene-diene monomer, a styrene-butadiene rubber, a fluorine rubber, various copolymers or the like.

Generally, the binder may be included in 1 to 20 wt%, preferably, 1 to 15 wt%, more preferably, 1 to 10 wt% on the basis of the total weight of the solid content excluding the solvent in the negative electrode mixture slurry.

The conductive agent is a component for further improving the conductivity of the negative electrode active material and may be included in 1 to 20 wt% on the basis of the total weight of the solid content of the negative electrode mixture slurry. The conductive agent is not specifically limited as long as it does not induce the chemical change of a battery and has conductivity, and may include: for example, carbon powder such as carbon black, acetylene black, Ketjen black, channel black, furnace black, lamp black and thermal black; graphite powder such as natural graphite, artificial graphite and graphite, having a very developed crystal structure; conductive fibers such as carbon fibers and metal fibers; fluorocarbon powder; conductive powder such as aluminum powder and nickel powder; conductive whiskers such as zinc oxide whiskers and potassium titanate whiskers; conductive metal oxides such as titanium oxide; and conductive materials such as polyphenylene derivatives.

The conductive agent may be included in 1 to 20 wt%, preferably, 1 to 15 wt%, more preferably, 1 to 10 wt% on the basis of the total weight of the solid content excluding the solvent in the negative electrode mixture slurry.

The solvent may include water or an organic solvent such as N-methyl-2-pyrrolidone (NMP), and may be used in an amount to provide a preferable viscosity together with the negative electrode active material, and selectively a binder and a conductive agent. For example, the solvent may be included so that the concentration of the solid content including the negative electrode active material, and selectively a binder and a conductive agent may be 50 wt% to 95 wt%, preferably, 70 wt% to 90wt%.

If the metal itself is used as the negative electrode, a metal thin film itself may be used, or the negative electrode may be manufactured by a method of physically joining, rolling or depositing a metal on a negative electrode current collector. The deposition method may use an electrical deposition or a chemical vapor deposition of a metal.

For example, the metal thin film itself or the metal joined/rolled/deposited on the negative electrode current collector may be a metal of one type selected from the group consisting of lithium (Li), nickel (Ni), tin (Sn), copper (Cu) and indium (In), or an alloy of two types of the metals.

### (3) Separator

In addition, as the separator, a porous polymer film which has been used as a common separator may be used, for example, a porous polymer film formed from a polyolefin-based polymer such as an ethylene homopolymer, a propylene homopolymer, an ethylene/butene copolymer, an ethylene/hexene copolymer and an ethylene/mathacrylate copolymer, may be used alone or as a stacked structure of thereof. Otherwise, a commonly used porous non-woven fabric, for example, a glass fiber having a high melting point, a non-woven fabric of a polyethylene terephthalate fiber, or the like, may be used, without limitation. In addition, in order to secure heat resistance and mechanical strength, a coated separator including a ceramic component or a polymer material may be used, optionally, in a single layer or a multilayer structure.

The appearance of the lithium secondary battery of the present invention is not specifically limited, but may be a cylinder-type using a can, a prismatic-type, a pouch-type or a coin-type.

Hereinafter, the present invention will be explained more particularly referring to particular embodiments. However, the embodiments are only illustrations to assist the understanding of the present invention, but do not limit the scope of the present invention. It would be obvious to a person skilled in the art that various changes and modifications are possible within the scope and technical spirit of the present description, and the changes and modifications are included in the claims attached herein.

### Examples

### Example 1

### (Preparation of Non-aqueous Electrolyte)

In an organic solvent (ethylene carbonate (EC): dimethyl carbonate (DMC) = 20:80 in a volume ratio), LiPF₆ was dissolved to be 1 M, to prepare a non-aqueous solvent, and to 99 g of the non-aqueous solvent, 1 g of a compound of Formula 1a below was injected to prepare a non-aqueous electrolyte.

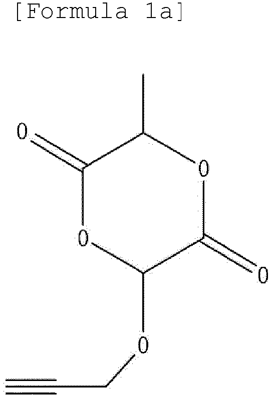

### (Manufacture of Lithium Secondary Battery)

A positive electrode active material (LiNi_{0.90}Co_{0.03}Mn_{0.06}Al_{0.01}O₂): a conductive agent (carbon black) : a binder (polyvinylidene fluoride) in a weight ratio of 97.5:1.3:1.2 were added to a N-methyl-2-pyrrolidone (NMP) solvent to prepare a positive electrode slurry (the solid content of 74wt%). The positive electrode slurry was applied on one side of a positive electrode current collector (Al thin film) having a thickness of 130µm, dried and roll pressed to manufacture a positive electrode.

A negative electrode active material (graphite:SiO = 97:3 in a weight ratio): a conductive agent (carbon black): a binder (polyvinylidene fluoride) in a weight ratio of 96.8:0.2:3.0 were added to a N-methyl-2-pyrrolidone (NMP) solvent to prepare a negative electrode slurry (the solid content of 60 wt%). The negative electrode slurry was applied on one side of a negative electrode current collector (Cu thin film) having a thickness of 128µm, dried, and roll pressed to manufacture a negative electrode.

In a drying room, a porous polymer separator manufactured using a polyolefin-based polymer was disposed between the positive electrode and the negative electrode thus formed, and the non-aqueous electrolyte prepared was injected to manufacture a secondary battery.

### Example 2

A secondary battery was manufactured by the same method as in Example 1 except for preparing a non-aqueous electrolyte by injecting 1 g of a compound of Formula 1d into 99 g of the non-aqueous solvent prepared in Example 1.

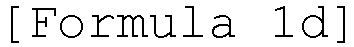

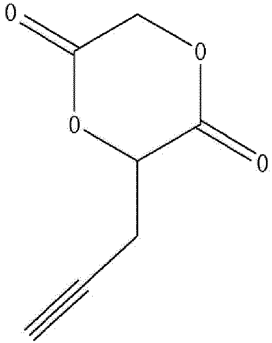

### Example 3

A secondary battery was manufactured by the same method as in Example 1 except for preparing a non-aqueous electrolyte by injecting 0.5 g of the compound of Formula 1a into 99.5 g of the non-aqueous solvent prepared in Example 1.

### Example 4

A secondary battery was manufactured by the same method as in Example 1 except for preparing a non-aqueous electrolyte by injecting 3 g of the compound of Formula 1a into 97.5 g of the non-aqueous solvent prepared in Example 1.

### Example 5

A secondary battery was manufactured by the same method as in Example 1 except for preparing a non-aqueous electrolyte by injecting 5 g of the compound of Formula 1a into 95 g of the non-aqueous solvent prepared in Example 1.

### Comparative Example 1

A secondary battery was manufactured by the same method as in Example 1 except for preparing a non-aqueous electrolyte using 100 g of the non-aqueous solvent prepared in Example 1.

### Comparative Example 2

A secondary battery was manufactured by the same method as in Example 1 except for preparing a non-aqueous electrolyte by injecting 0.5 g of 3,6-dimethyl-1,4-dioxane-2,5-dione into 99.5 g of the non-aqueous solvent prepared in Example 1.

### Experimental Example 1-Evaluation of High Temperature Cycle Characteristics

With respect to the secondary batteries manufactured in Examples 1 to 5 and Comparative Examples 1 and 2, cycle characteristics were evaluated.

Particularly, 200 cycles of charge and discharge were performed with respect to each of the batteries manufactured in Examples 1 to 5 and Comparative Examples 1 and 2, when 1 cycle includes charge at 45°C with a 1.0 C-rate in a CC/CV mode up to 4.2 V and discharge with a 1.0 C-rate in a CC mode to 2.5 V, and a capacity retention rate was measured in contrast to an initial capacity after 1 cycle. The results are shown in Table 1.

**[Table 1]**

| | Capacity retention rate (%) |
|---|---|
| Example 1 | 94.2% |
| Example 2 | 93.5% |
| Example 3 | 90.9% |
| Example 4 | 93.3% |
| Example 5 | 92.7% |
| Comparative Example 1 | 87.6% |
| Comparative Example 2 | 90.3% |

As shown in Table 1, it can be confirmed that Examples 1 to 5, using the additive for a non-aqueous electrolyte of the present invention showed high capacity retention rates after 200 cycles and improved lifetime characteristics in contrast to Comparative Example 1. Particularly, it can be confirmed that the lifetime characteristics of the lithium secondary batteries of Examples 1 to 5, using the additive of Formula 1 of the present invention were better in contrast to Comparative Example 2 using 3,6-dimethyl-1,4-dioxane-2,5-dione in which a propargyl group is not substituted, different from the additive for a non-aqueous electrolyte of the present invention.

### Experimental Example 2-Evaluation of High Temperature Storage Properties

With respect to the secondary batteries manufactured in Examples 1 to 5 and Comparative Examples 1 and 2, storage properties at a high temperature were evaluated.

Particularly, each of the batteries manufactured in Examples 1 to 5 and Comparative Examples 1 and 2 was fully charged to 4.35 V, and then, stored at 60°C for 6 weeks.

Before the storage, the capacity of the fully charged secondary battery was measured and set as the initial capacity of the secondary battery.

After 6 weeks, with respect to the stored secondary battery, a capacity was measured, and a reduced capacity during the storage period of 6 weeks was calculated. The percentage of the reduced capacity to the initial capacity of the secondary battery was calculated, and a capacity retention rate after 6 weeks was derived. The results are shown in Table 2.

**[Table 2]**

| | Capacity retention rate (%) |
|---|---|
| Example 1 | 92.3% |
| Example 2 | 92.1% |
| Example 3 | 90.4% |
| Example 4 | 93.7% |
| Example 5 | 94.6% |
| Comparative Example 1 | 89.5% |
| Comparative Example 2 | 89.9% |

As shown in Table 2, the secondary batteries of Examples 1 to 5 showed higher capacity retention rates after 6 weeks and stable performance at a high temperature in contrast to the secondary battery of Comparative Example 1. Particularly, it can be confirmed that the high temperature storage properties of the lithium secondary batteries of Examples 1 to 5 using the additive of Formula 1 of the present invention were better in contrast to Comparative Example 2 using 3,6-dimethyl-1,4-dioxane-2,5-dione in which a propargyl group is not substituted, different from the additive for a non-aqueous electrolyte of the present invention.

## Claims

1. A non-aqueous electrolyte comprising:
a lithium salt;
an organic solvent; and
a compound of the following Formula 1 as an additive: 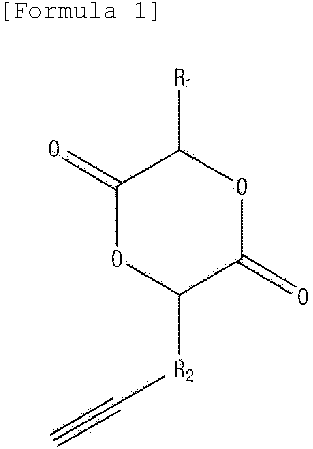
in Formula 1,
R₁ is one selected from the group consisting of H, an alkyl group of 1 to 10 carbon atoms, an alkoxy group of 1 to 10 carbon atoms and an aryl group of 6 to 8 carbon atoms, and
R₂ is one selected from the group consisting of an alkylene group of 1 to 10 carbon atoms and -OR₃- (R₃ is an alkylene group of 1 to 10 carbon atoms).

2. The non-aqueous electrolyte according to claim 1, wherein R₁ of Formula 1 is H or an alkyl group of 1 to 10 carbon atoms.

3. The non-aqueous electrolyte according to claim 1, wherein R₂ of Formula 1 is one selected from the group consisting of an alkylene group of 1 to 5 carbon atoms and -OR₃- (R₃ is an alkylene group of 1 to 5 carbon atoms).

4. The non-aqueous electrolyte according to claim 1, wherein the compound of Formula 1 is one selected from the group consisting of the following Formulas 1a to 1d:

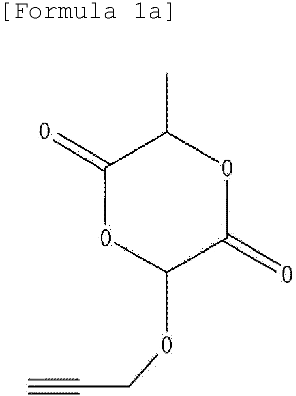

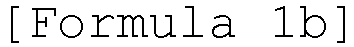

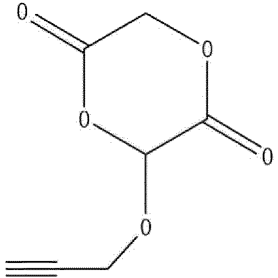

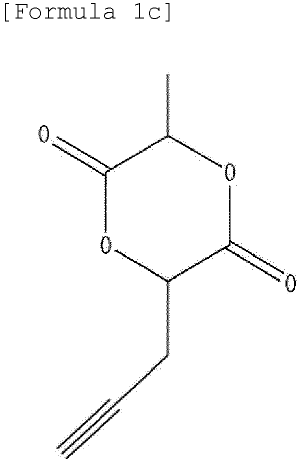

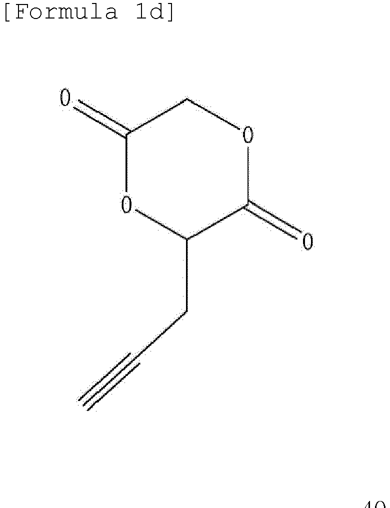

5. The non-aqueous electrolyte according to claim 1, wherein the compound of Formula 1 is comprised in 0.01 parts by weight to 5 parts by weight on the basis of 100 parts by weight of the non-aqueous electrolyte.

6. The non-aqueous electrolyte according to claim 1, wherein the lithium salt is at least one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂ and LiN(SO₂CF₃)₂.

7. The non-aqueous electrolyte according to claim 1, wherein the lithium salt is comprised in a concentration of 0.5 M to 3 M.

8. The non-aqueous electrolyte according to claim 1, wherein the organic solvent comprises at least one selected from the group consisting of a cyclic carbonate-based organic solvent, a linear carbonate-based organic solvent, a linear ester-based organic solvent and a cyclic ester-based organic solvent.

9. A lithium secondary battery, comprising:
a positive electrode;
a negative electrode; and
the non-aqueous electrolyte according to any one among claims 1 to 8.

10. The lithium secondary battery according to claim 9, wherein the positive electrode comprises a lithium nickel cobalt manganese-based oxide as a positive electrode active material.

11. The lithium secondary battery according to claim 9, wherein the negative electrode comprises graphite and SiOₓ(0≤x<2) as negative electrode active materials.
